# EUROPÄISCHE PATENTANMELDUNG

(11) **EP 1 643 245 A2**
(43) Veröffentlichungstag der Anmeldung: **05.04.2006**
(21) Anmeldenummer: 05016494.6
(22) Anmeldetag: 29.07.2005
(51) Int. Cl.: G01N 33/18, G01N 27/49

(54) **Amperometrisches Verfahren zur Bestimmung und Steuerung der Biozidkonzentration in einem wasserführenden System**

(30) Priorität: 29.09.2004 DE 102004047096
(71) Anmelder: Henkel Kommanditgesellschaft auf Aktien, 40589 Düsseldorf (DE)
(72) Erfinder: Hater, Wolfgang, 41564 Kaarst (DE); Berné, Javier, 08204 Sabadell (Barcelona) (ES); Verdes, Jordi, 08530 La Garriga (Barcelona) (ES); Rodriguesz, Hector, 08840 Viladecans (Barcelona) (ES)

(57) **Zusammenfassung**

Verfahren zur Bestimmung der Konzentration von organischen Bioziden oder der Abweichung der Konzentration solcher Biozide von einer vorgewählten Sollkonzentration in einem wasserführenden System durch Ermittlung einer amperometrischen Messgröße, wobei man a) entweder den Absolutbetrag der Biozidkonzentration durch Vergleich des gemessenen Wertes der amperometrischen Messgröße mit einer Kalibrierkurve bestimmt oder b) die Abweichung der Konzentration von Bioziden von einer vorgewählten Sollkonzentration bestimmt, indem man den gemessenen Wert der amperometrischen Messgröße mit demjenigen Wert vergleicht, den man bei der Sollkonzentration erhält. Dieser Verfahrensschritt kann in unterschiedlichen Verfahrensvarianten zur Kontrolle und Steuerung des Biozidgehalts eingesetzt werden. Bei dem wasserführenden System kann es sich beispielsweise um ein wasserführendes Kreislaufsystem, insbesondere um einen Kühlkreislauf handeln.

## Beschreibung

Die Erfindung betrifft die Verhinderung bzw. Eingrenzung von mikrobiologischem Wachstum in einem wasserführenden System, insbesondere in einem Kreislaufsystem und ganz besonders in einem Kühlkreislauf. Mikrobiologisches Wachstum führt hier zur Ausbildung von Biofilmen auf Wärmeaustauscherflächen, was die Effizienz des Wärmeaustauschs verringert und zu verstärkter Korrosion führen kann. Daher gibt man solchen wasserführenden Systemen entweder stoßweise Biozide zu oder man versucht, eine wirksame Biozidkonzentration ständig aufrecht zu erhalten.

Hierzu werden nach dem Stand der Technik Biozide eingesetzt. Neben den oxidierenden anorganischen Bioziden, z. B. NaOCl, ClO₂, H₂O₂, O₃, werden auch verschiedene Biozide auf der Basis organischer Verbindungen eingesetzt, deren Wirkung in der Regel nicht auf Oxidation beruht. Typische Vertreter sind Dibromnitrilopropionamid (Handelsname 20%-Lösung: Actizid DB 20 der Firma Thor-Chemie), Chlorisothiazolinon (Handelsname: Kathon 886 F der Firma Rohm&Haas) oder organische Percarbonsäuren wie beispielsweise Peressigsäure oder deren Salze.

Um die gewünschte Wirkung zu erreichen und eine Umweltbelastung oder zumindest erhöhte Kosten durch Überdosierung zu vermeiden, ist eine analytische Überwachung der Biozide erforderlich. Hierzu stehen für die anorganischen oxidierenden Biozide verschiedene Verfahren zur Verfügung: Messung des Oxidations/Reduktionspotentials (ORP), Messung des "freien Chlor'-Gehaltes, amperometrische Messung. Die Bestimmung der organischen Biozide dagegen ist nach dem Stand der Technik aufwendig und in vielen Fällen nicht vor Ort durchführbar. So wird beispielsweise die Konzentration von Dibromnitrilopropionamid (DBNPA) mittels Hochdruck-Flüssigkeitschromatographie (HPLC) bestimmt.

in der Praxis führt man daher üblicherweise keine Messung der Konzentration organischer Biozide durch, sondern gibt bei einer Stoßbehandlung die aus der angestrebten Konzentration und dem Systemvolumen berechnete Menge dem System zu. Die tatsächlich im System vorliegende Menge kann durch Absorptionsverluste oder fehlerhafte Kenntnis der Systemdaten deutlich von der angestrebten Konzentration abweichen, so dass nicht sichergestellt werden kann, dass die für den Behandlungserfolg notwendige Biozidkonzentration im System tatsächlich vorliegt oder dass nicht überdosiert wurde.

Es bestand daher der Bedarf an einem einfachen Verfahren zur Bestimmung organischer Biozide, das vor Ort durchgeführt werden kann, vorzugsweise auch kontinuierlich bzw. quasi-kontinuierlich, so dass die Biozidkonzentration durch Anpassung der Pumpenleistung gesteuert werden kann. Insbesondere soll es möglich sein, die Dosierpumpen zur Ergänzung des Biozidgehalts automatisch je nach Ergebnis der Bestimmung der organischen Biozide zu steuern, so dass ohne menschliches Eingreifen die erwünschte Biozidkonzentration automatisch aufrecht erhalten werden kann.

Aus WO 92/09890 ist ein Verfahren bekannt, das Biozid Dibromnitrilpropionamid (DBNPA) über eine Farbreaktion analytisch zu bestimmen. Demnach eignen sich als Farbreagenzien phenolische oder anilinische Verbindungen, beispielsweise p-Phenylendiamin. Ein spezielles Farbreagenz, das unter diese generisch angegebene Gruppe fällt, ist das N,N-Diethyl-p-phenylendiamin in Form des Sulfat-Salzes (DPD). Dieses wird im Stand der Technik zur Bestimmung des sogenannten "freien wirksamen Chlors" in wässriger Lösung eingesetzt. Dabei wird unter "freies wirksames Chlor" elementares Chlor, unterchlorige Säure und Hypochloridionen verstanden. In Gegenwart von Iodidionen kann dieses Reagenz zusätzlich zur Bestimmung von Verbindungen eingesetzt werden, die gebundenes Chlor enthalten. Der Gehalt an "freiem wirksamem Chlor" bzw. an "gebundenem Chlor" wird in der Praxis in der Regel dadurch bestimmt, dass man die Tiefe der Färbung visuell mit einer Vergleichskala vergleicht, deren Farbstufen direkt in "freiem wirksamen Chlor" oder "Gesamtchlor" (d.h. die Summe aus freiem wirksamen Chlor und gebundenem Chlor) ausgedrückt sind. Diese Methode ist vergleichsweise aufwendig und nur von geschultem Laborpersonal durchführbar.

Daher besteht ein Bedarf nach einem zumindest weitgehend automatisierbaren Verfahren zur Bestimmung von organischen Bioziden in wasserführenden Systemen. Das Ergebnis der Bestimmung soll nach Möglichkeit entweder direkt als elektrisches Signal anfallen bzw. leicht in ein solches umgewandelt werden können, damit dieses Signal unmittelbar, d. h. ohne menschliches Eingreifen, zur Steuerung von Dosiereinrichtungen zur Biozidzugabe herangezogen werden kann.

Überraschenderweise wurde gefunden, dass bei einer amperometrischen Messung (= Messung des Stroms zwischen zwei Elektroden bei vorgegebenem Elektrodenpotential) und entsprechender Kalibirierung der Messeinrichtung ein Signal erhalten wird, das für die Praxis ausreichend genau mit der Konzentration organischer Biozide in einem wasserführenden system korreliert ist. Hierfür sind beispielsweise Messgeräte mit Messelektroden geeignet, die zur Bestimmung der Konzentration von anorganischen Oxidationsmitteln wie beispielsweise H₂O₂ bzw. Cl₂ oder Br₂ in wasserführenden Systemen vorgesehen sind. Beispiele derartiger Messgeräte und Messelektroden sind:

| Firma | Messgerät | Elektrode | Vorgesehen für |
|---|---|---|---|
| DOSIM | LPHCL | ECL6 (Amperometrie) | Cl₂ - Bestimmung |
| DOSIM | CCS Digital | ECL4 (Amperometrie) | Cl₂ - Bestimmung |
| Sugar Valley | Station II | Amperometrie | Cl₂ - und H₂O₂ - Bestimmung |
| CRF Instruments | Controller 530 | Amperometrie | Cl₂ - und H₂O₂ - Bestimmung |
| Prominent | Dulcometer D1CA | Amperometrie | H₂O₂ - Bestimmung |

Diese Messgeräte und die zugehörenden Elektroden sind für den Praxiseinsatz bereits so kalibriert, dass das Ergebnis der amperometrischen Messung direkt als Konzentration von Cl₂, Br₂ oder H₂O₂ ausgedrückt wird. Dies kann für die erfindungsgemäße Verwendung zur Bestimmung der Konzentration organischer Biozide beibehalten werden, wobei man durch Erstellen von Kalibrierkurven oder Kalibriertabellen ermittelt, welcher Konzentration organischer Biozide der angegebene Wert der scheinbaren Konzentration von Cl₂, Br₂ oder H₂O₂ entspricht. Soll nicht der Absolutgehalt an organischen Bioziden bestimmt werden, sondern die Abweichung der Konzentration von einer vorgewählten Sollkonzentration, genügt es auch, in einem Kalibrierschritt die Sollkonzentration einzustellen und zu bestimmen, welche scheinbare Konzentration von Cl₂, Br₂ oder H₂O₂ das Messgerät bei der eingestellten Sollkonzentration der organischen Biozide anzeigt.

Vergleichsversuche haben gezeigt, dass das Ergebnis einer Messung des Reduktions-Oxidations-Potentials nicht mit der Konzentration organischer Biozide korreliert.

Die vorliegende Erfindung betrifft in einer ersten Ausführungsform ein Verfahren zur Bestimmung der Konzentration von organischen Bioziden oder der Abweichung der Konzentration solcher Biozide von einer vorgewählten Sollkonzentration in einem wasserführenden System, dadurch gekennzeichnet, dass man eine amperometrische Messung durchführt und hierdurch eine amperometrische Messgröße erhält und
a) entweder den Absolutbetrag der Biozidkonzentration durch Vergleich des gemessenen Wertes der amperometrischen Messgröße mit einer Kalibrierkurve bestimmt oder
b) die Abweichung der Konzentration von Bioziden von einer vorgewählten Sollkonzentration bestimmt, indem man den gemessenen Wert der amperometrischen Messgröße mit demjenigen Wert vergleicht, den man bei der Sollkonzentration erhält.

Bei der Ausführungsvariante a) wird der Absolutbetrag der Biozidkonzentration bestimmt. Dies geschieht dadurch, dass der gemessene Wert der amperometrischen Messgröße mit einer Kalibrierkurve verglichen wird, die beispielsweise in graphischer Form, in einer Tabellendarstellung oder als mathematische Funktion vorliegen kann. Dies kann durch einen menschlichen Bearbeiter erfolgen. Vorzugsweise geschieht dieser Vergleich im Hinblick auf die angestrebte Automatisierung direkt in einer elektronischen Datenverarbeitungsanlage. Diese kann dann den ermittelten Wert der Biozidkonzentration anzeigen und/oder ausgeben und/oder auf einem Datenträger aufzeichnen. Weiterhin kann dieser Wert, wie nachstehend beschrieben, zum Ansteuern von Dosiereinrichtungen für die Nachdosierung der Biozide eingesetzt werden.

In der Ausführungsalternative b) wird nicht der Absolutbetrag der Biozidkonzentration, sondern die Abweichung der Konzentration der Biozide von einer vorgewählten Sollkonzentration bestimmt. Dies geschieht dadurch, dass man den gemessenen Wert der amperometrischen Messgröße mit demjenigen Wert vergleicht, den man bei der Sollkonzentration erhält. Auch dies kann durch einen menschlichen Bearbeiter erfolgen. Vorzugsweise geschieht dies jedoch ebenfalls automatisch in einer elektronischen Datenverarbeitungsanlage. Selbstverständlich muss hierfür der Wert der amperometrischen Messgröße, den man bei der Sollkonzentration erhält, zuvor bestimmt worden und in die elektronische Datenverarbeitungsanlage eingegeben worden sein.

Die vorstehend beschriebene Vorgehensweise dient dazu, entweder direkt die Konzentration der Biozide oder die Abweichung dieser Konzentration von einer vorgewählten Sollkonzentration zu bestimmen. In einer weitergehenden und bevorzugten Weiterbildung der Erfindung ist dieses Verfahren der erste Schritt in einer Verfahrensfolge, in der in einem nächsten Schritt der erhaltene Wert der Biozidkonzentration bzw. deren Abweichung von einer Sollkonzentration verwendet wird, um die vorgegebene Sollkonzentration der Biozide in dem wasserführenden System wieder einzustellen. Hierfür sind 3 unterschiedliche Ausführungsformen möglich:

Die erste Ausführungsform betrifft ein Verfahren zur Steuerung der Konzentration organischer Biozide in einem wasserführenden System, dadurch gekennzeichnet, dass man
i) nach Anspruch 1 entweder gemäß Alternative a) die Konzentration dieser Biozide bestimmt und danach ihre Abweichung von einer vorgewählten Sollkonzentration berechnet oder gemäß Alternative b) direkt die Abweichung der Konzentration der Biozide von der vorgewählten Sollkonzentration bestimmt,
ii) für den Fall, dass die Konzentration der Biozide kleiner ist als die Sollkonzentration, die Menge an Biozid berechnet, die dem wasserführenden System zugegeben werden muss, um die Sollkonzentration zu erreichen, und
iii) eine Dosiereinrichtung aktiviert, die aus einem Vorratsgefäß eine solche Menge an Biozid dem wasserführenden System zudosiert, dass die Sollkonzentration zumindest angenähert erreicht wird.

In dieser Ausführungsform wird also die Menge an Biozid berechnet (durch einen menschlichen Bearbeiter oder vorzugsweise automatisch in einer elektronischen Datenverarbeitüngsanlage), die dem wasserführenden System zugegeben werden muss, um die Sollkonzentration zu erreichen. Hierzu müssen das Volumen des wasserführenden systems ("Systemvolumen") und die Konzentration der Biozidlösung bekannt sein. Danach wird eine Dosiereinrichtung aktiviert, beispielsweise eine Dosierpumpe, die eine entsprechende Menge an Biozid dem wasserführenden System zudosiert. Die zuzugebende Menge wird so berechnet, dass die Sollkonzentration zumindest angenähert erreicht wird. Mit "angenähert erreicht" ist gemeint, dass nach Zugabe der berechneten Menge an Biozid die tatsächliche Konzentration im wasserführenden System um nicht mehr als 20 %, insbesondere nicht mehr als 10 % von der vorgewählten Sollkonzentration abweicht.

In dieser Verfahrensvariante ist also ein Berechnungsschritt notwendig, um die Menge an Biozid zu bestimmen, die dem wasserführenden System zum Erreichen der Sollkonzentration zugegeben werden muss. Eine alternative Ausführungsform hierzu besteht darin, dass man bei festgestellter Unterschreitung der Sollkonzentration durch Ansteuern von Dosiereinrichtungen ohne zwischengeschalteten Berechnungsschritt dem wasserführenden System Biozid zudosiert und das erfindungsgemäße Bestimmungsverfahren kontinuierlich oder zumindest in kurzen Zeitabständen (beispielsweise jede Minute bis etwa jede 2. Stunde) ablaufen lässt um festzustellen, ob die Sollkonzentration zumindest angenähert erreicht ist, d. h. der gemessene Wert um nicht mehr als 20 %, vorzugsweise nicht mehr als 10 % von der vorgewählten Sollkonzentration abweicht.

In dieser Verfahrensvariante betrifft die vorliegende Erfindung demnach ein Verfahren zur Steuerung der Konzentration organischer Biozide in einem wasserführenden System, dadurch gekennzeichnet, dass man
i) nach Anspruch 1 gemäß Alternative b) direkt die Abweichung der Konzentration der Biozide von der vorgegebenen Sollkonzentration bestimmt,
ii) für den Fall, dass die Konzentration der Biozide kleiner ist als die Sollkonzentration,
iii) eine Dosiereinrichtung aktiviert, die aus einem Vorratsgefäß so lange Biozid dem wasserführenden System zudosiert, bis bei wiederholter Bestimmung der Abweichung der Konzentration der Biozide von der vorgewählten Sollkonzentration eine Abweichung ermittelt wird, die nicht mehr als 20 %, vorzugsweise nicht mehr als 10 % der Sollkonzentration beträgt.

Die Abweichung der gemessen Konzentration von der Sollkonzentration kann absolut als Mengenkonzentration, beispielsweise in der Einheit mg/l (= ppm), angegeben werden. Sie kann jedoch auch relativ zur Sollkonzentration angegeben werden, beispielsweise: Istkonzentration = x % der Sollkonzentration.

Eine dritte Verfahrensalternative besteht darin, dass man dem wasserführenden System kontinuierlich oder diskontinuierlich eine vorgewählte Menge an Biozid pro vorgewähltem Zeitintervall zusetzt. Diese vorgewählte Menge kann auf Erfahrung beruhen. Mit Hilfe des erfindungsgemäßen Bestimmungsverfahrens überprüft man dann von Zeit zu Zeit, ob hierbei die erwünschte Konzentration an Biozid zumindest angenähert aufrecht erhalten wird, also die tatsächliche Biozidkonzentration um nicht mehr als 20 %, vorzugsweise nicht mehr als 10 % von einem vorgewählten (z.B. auf Erfahrung beruhenden) Sollwert abweicht.

In dieser Verfahrensalternative betrifft die vorliegende Erfindung ein Verfahren zur Steuerung der Konzentration organischer Biozide in einem wasserführenden System, dadurch gekennzeichnet, dass man dem wasserführenden System kontinuierlich oder diskontinuierlich eine vorgewählte Menge an Biozid pro vorgewähltem Zeitintervall zusetzt und
i) nach Anspruch 1 entweder gemäß Alternative a) die Konzentration dieser Biozide bestimmt und danach ihre Abweichung von einer vorgewählten Sollkonzentration berechnet oder gemäß Alternative b) direkt die Abweichung der Konzentration der Biozide von der vorgewählten Sollkonzentration bestimmt und
ii) für den Fall, dass die Konzentration der Biozide um mehr als 20 % von der vorgewählten Sollkonzentration abweicht, bei einer Abweichung nach unten die vorgewählte Menge an pro Zeiteinheit zugesetztem Biozid erhöht oder bei einer Abweichung nach oben die vorgewählte Menge an pro Zeiteinheit zugesetztem Biozid verringert. In Ergänzung hierzu kann man bei einer Abweichung der tatsächlichen Biozidkonzentration nach unten (relativ zum Sollwert) zunächst vorsehen, durch einmalige oder mehrmalige Zugabe von Biozid zunächst die Sollkonzentration zumindest angenähert einzustellen, wie es den weiter oben bestehenden Verfahrensalternativen entspricht.

Unabhängig von der gewählten Verfahrensvariante sieht man vorzugsweise vor, dass das Gesamtverfahren ohne menschliches Eingreifen programmgesteuert automatisch abläuft. Dies heißt, man verwendet eine entsprechend programmierte Datenverarbeitungsanlage, die (angenähert) kontinuierlich oder nach vorgewählten Zeiträumen den ersten Verfahrensschritt der Bestimmung der Biozidkonzentration bzw. deren Abweichung von der Sollkonzentration startet und je nach Ergebnis der Bestimmung automatisch eine Dosiereinrichtung aktiviert, um dem wasserführenden System eine solche Menge Biozid zuzugeben, dass die vorgewählte Sollkonzentration zumindest angenähert erreicht wird. Auf diese Weise ist es möglich, den Biozidgehalt des wasserführenden Systems automatisch zu kontrollieren und einzustellen, ohne dass hierzu menschliches Eingreifen notwendig ist. Dies erhöht zum einen die Verfahrenssicherheit, da die Biozidkonzentration unabhängig von der Anwesenheit von menschlichem Bedienungspersonal quasi kontinuierlich oder zumindest in kurzen Zeitabständen nachgeregelt werden kann. Beispielsweise kann dies in Zeitabständen erfolgen, die im Bereich von Minuten (z.B. 5 Minuten) bis zu mehreren Tagen liegen. Beispielsweise können die Zeitabstände kleiner sein als 30 Tage, als 20 Tage, als 10 Tage, als 1 Tag. Verwendet man die Verfahrensalternative gemäß Anspruch 4, so kann man auch längere Zeitintervalle vorsehen. Beispielsweise können dann Zeitintervalle gewählt werden, die zwischen einem Tag und 3 Monate liegen und die beispielsweise kleiner sind als etwa 3 Monaten, zwei Monate oder einen Monat.

Eine mögliche Ausführungsform des Verfahrens ist dadurch gekennzeichnet, dass man die biologische Belastung des wasserführenden Systems bestimmt und in dem Fall, dass diese einen vorgewählten Höchstwert übersteigt, die vorgewählte Sollkonzentration an organischem Biozid erhöht. In dieser Variante überprüft man also durch bekannte Verfahren wie beispielsweise eine Trübungsmessung, eine Messung der Biofilmbildung (beispielsweise nach der Lehre der Deutschen Patentanmeldung DE 103 26586 oder den darin zitierten weiteren Verfahren) oder eine Bestimmung von Adenosintriphosphat das Ausmaß der biologischen Aktivität in dem wasserführenden System. Übersteigt diese einen vorzugebenden Schwellenwert, obwohl die Konzentration von organischem Biozid zumindest angenähert bei der Sollkonzentration liegt, so erhöht man die Sollkonzentration an organischem Biozid auf einen neuen Wert. Diesen neuen Wert (sowie erforderlichenfalls den Wert der amperometrischen Messgröße, der der neuen Sollkonzentration entspricht) gibt man in das Steuersystem für das erfindungsgemäße Verfahren ein. Bei weiterer Anwendung dieses Verfahrens wird dann automatisch die neue Sollkonzentration zumindest angenähert eingestellt.

Vorzugsweise ist das System so ausgelegt, dass die jeweils bestimmte Biozidkonzentration bzw. die Abweichung vom Sollwert sowie die jeweils zugegebene Biozidmenge auf einem Datenträger aufgezeichnet wird. Dabei kann sich dieser Datenträger am Ort der Bestimmung, z.B. innerhalb der hierfür eingesetzten elektronischen Datenverarbeitungsanlage befinden. Die Daten können jedoch auch auf eine entfernte Einrichtung übertragen und dort aufgezeichnet werden. Dies ermöglicht die Kontrolle des wasserführenden Systems aus der Ferne, beispielsweise vom Sitz des Lieferanten der eingesetzten Wasserbehandlungsmittel, zu denen das Biozid gehört.

Weiterhin sieht man vorzugsweise vor, dass die Bestimmung des Biozidgehalts bzw. dessen Abweichung von der Sollkonzentration und ggf. auch die automatische Nachdosierung zu jedem beliebigen Zeitpunkt durch ein manuell gegebenes Startsignal angestoßen werden kann. Dies erlaubt es, die Bestimmung der Biozidkonzentration zu jedem beliebigen Zeitpunkt zu starten. Diese Steuerung durch ein externes Startsignal kann zusätzlich zum vorprogrammierten automatischen Ablauf oder anstelle eines solchen vorgewählten Ablaufs erfolgen. Die Bestimmung des Biozidgehalts bzw. dessen Abweichung von der Sollkonzentration und ggf. auch die automatische Nachdosierung kann jedoch auch automatisch nach vorgewählten Zeitintervallen oder zu vorgewählten Zeitpunkten erfolgen. Weiterhin kann die Bestimmung des Biozidgehalts bzw. dessen Abweichung von der Sollkonzentration und ggf. auch die automatische Nachdosierung dann automatisch aufgrund einer Bestimmung der biologischen Belastung des wasserführenden Systems erfolgen, wenn diese einen vorgewählten Maximalwert übersteigt. Wenn in letzterem Fall festgestellt wird, dass die Biozidkonzentration zumindest angenähert der Sollkonzentration entspricht, also beispielsweise zu nicht mehr als 20 % von dieser abweicht, kann zusätzlich - wie vorstehend beschrieben - die Sollkonzentration manuell oder automatisch erhöht werden.

Das erfindungsgemäße Verfahren ist, unabhängig von der gewählten Verfahrensvariante, insbesondere geeignet für Biozide, bei denen es sich um halogenierte Derivate von Carbonsäureamiden, um organische Percarbonsäuren oder deren Salze oder um Verbindungen mit mindestens einer Hydroxyethylgruppe handelt. Beispiele hierfür sind: Dibromnitrilopropionamid (insbesondere Dibrom-3-nitrilopropionamid-2,2 (DBNPA)), Peressigsäure, 2-Hydroxymethylaminoethanol und Tris(2-hydroxyethyl)hexahydrotriazin. Weiterhin kann das Verfahren bei folgenden Bioziden angewandt werden: Bronopol (Protectol^{R} BN 30 der BASF, CAS-Nr. 52-51-7), 2-Chloracetamid (CAS-Nr. 79-07-2), Glutaraldehyd (CAS-Nr. 111-30-8), Alkali-mono- und dimethyldithiocarbamat (CAS-Nr. 128-05-01 und 128-03-0), Tetrakishydroximethylphosphoniumsulfat oder -chlorid und Oxazolidin (CAS-Nr. 66204-44-2).

Wie einleitend erwähnt, ist das erfindungsgemäße Verfahren insbesondere für solche wasserführenden Systeme geeignet, die ein wasserführendes Kreislaufsystem, insbesondere einen Kühlkreislauf darstellen.

### Ausführungsbeispiele

### Beispiel 1

Im nachfolgenden ersten Ausführungsbeispiel wird als elektrochemische Messgröße das Ergebnis einer amperometrischen Messung verwendet. Dabei ist das eingesetzte Messgerät (Controller-530 der Firma CRF Instruments) bereits herstellerseitig oder durch Voreinstellung so kalibriert, dass das Ergebnis der amperometrischen Messung direkt als Biozidgehalt in ppm (mg/l) angegeben wird, und zwar ausgedrückt als äquivalenter Gehalt von "freiem Chlor". Dieser wird mit demjenigen Biozidgehalt verglichen, den man mittels der Farbreaktion mit DPD erhält. Auch hier wird der durch Vergleich mit einer Farbskala erhaltene Wert der Biozidkonzentration als "Gesamtchlor" in ppm ausgedrückt. Für die Vergleichs-Bestimmung des Biozidgehalts mit der DPD-Methode wird nach einer Verfahrensvorschrift der Firma Merck: "Chlor- und pH-Test" verfahren. Diese Verfahrensvorschrift ist zur Bestimmung von freiem oder gebundenem Chlor auf dem hier betroffenen technischen Gebiet allgemein bekannt und auch in der DIN-Vorschrift "Deutsche Einheitsverfahren zur Wasser-, Abwasser- und Schlammuntersuchungen G4-2 bzw. DIN EN ISO 7393-2 (04.2000) Bestimmung von freiem Chlor und Gesamtchlor; Teil 2 Kolorimetrisches Verfahren mit N, N-Diethyl-1,4-Phenylendiamin für Routinekontrollen" dargelegt.

### Durchführung:

In einem industriellen Kühlkreislauf mit einem Systemvolumen von 2,5 m³ wurden 127 ml einer 20% -igen Lösung von Dibromnitrilopropionamid (DBNPA) zugegeben. Hieraus ergibt sich eine Sollkonzentration von etwa 50 g/m³. Zu verschiedenen Zeiten nach der Zugabe wurde der "Gesamt-Chlorgehalt" (dies heißt, DBNPA-Gehalt als "Chlorgehalt" ausgedrückt) mittels DPD-Anfärbung bestimmt und der "freie Chlor-Gehalt", wie er von dem Messgerät CRF, Controler 530 angegeben wurde, gegenübergestellt.

| Zeit nach Zugabe [Minuten] | gesamt-Chlor (DPD) [ppm] | 'freies Chlor' (Controller-530, CRF) [ppm] |
|---|---|---|
| (vor Zugabe | 0,1 | 0) |
| 13 | 0,11 | 0 |
| 25 | 2,06 | 0,68 |
| 30 | 1,91 | 0,62 |
| 40 | 1,83 | 0,61 |
| 45 | 1,81 | 0,60 |
| 55 | 1,53 | 0,55 |
| 285 | 0,07 | 0 |

Es ist deutlich zu erkennen, dass das Signal der amperometrischen Messung den Ergebnissen der DPD-Messung mit guter Korrelation folgt. CRF = 0,348 * DPD - 0,026. R²= 0,9951.

### Beispiel 2

Auch in diesem Beispiel wird als elektrochemische Messgröße das Ergebnis einer amperometrischen Messung verwendet. Dabei ist das eingesetzte Messgerät (Controller-530 der Firma CRF Instruments) bereits herstellerseitig oder durch Voreinstellung so kalibriert, dass das Ergebnis der amperometrischen Messung direkt als Biozidgehalt in ppm (mg/l) angegeben wird, in diesem Fall ausgedrückt als äquivalenter Gehalt von "Brom".

Brunnenwasser wird zunehmend mit einer 0,8-gewichtsprozentigen wässrigen Lösung von DBNPA versetzt, so dass das Brunnenwasser rechnerisch die in der nachstehenden Tabelle aufgeführten Konzentrationen (ppm = mg/l) an DBNPA enthielt. Der scheinbare Gehalt an "Brom" ("ppm Br") wurde mit dem entsprechend kalibrierten Controller-530 der Firma CRF bestimmt.

### Ergebnis:

| DBNPA-Konzentration (ppm) | "ppm Br" |
|---|---|
| 10 | 0,70 |
| 20 | 1,42 |
| 30 | 2,64 |
| 40 | 4,01 |
| 50 | 5,14 |
| 76 | 7,12 |
| 100 | 8,82 |

Das Ergebnis der amperometrischen Messung folgt mit einer für die Praxis ausreichenden Korrelation (Korrelationsfaktor: 0,9925) der tatsächlich vorliegenden Biozidkonzentration.

Das Messgerät kann vorteilhaft mit einer Einheit verbunden sein, die zur Steuerung der Biozidzugabe dient. Dieses kann zum Beispiel durch Ein-/Ausschalten der Dosierpumpe nach Unter- bzw. Überschreiten eines vorgegebenen Sollwertes erfolgen, oder durch automatisches Nachregeln der Einstellung der Dosierpumpe mit handelsüblichen Reglern.

## Patentansprüche

1. Verfahren zur Bestimmung der Konzentration von organischen Bioziden oder der Abweichung der Konzentration solcher Biozide von einer vorgewählten Sollkonzentration in einem wasserführenden System, **dadurch gekennzeichnet, dass** man eine amperometrische Messung durchführt und hierdurch eine amperometrische Messgröße erhält und
a) entweder den Absolutbetrag der Biozidkonzentration durch Vergleich des gemessenen Wertes der amperometrischen Messgröße mit einer Kalibrierkurve bestimmt
oder
b) die Abweichung der Konzentration von Bioziden von einer vorgewählten Sollkonzentration bestimmt, indem man den gemessenen Wert der amperometrischen Messgröße mit demjenigen Wert vergleicht, den man bei der Sollkonzentration erhält.

2. Verfahren zur Steuerung der Konzentration organischer Biozide in einem wasserführenden System, **dadurch gekennzeichnet, dass** man
i) nach Anspruch 1 entweder gemäß Alternative a) die Konzentration dieser Biozide bestimmt und danach ihre Abweichung von einer vorgewählten Sollkonzentration berechnet oder gemäß Alternative b) direkt die Abweichung der Konzentration der Biozide von der vorgewählten Sollkonzentration bestimmt,
ii) für den Fall, dass die Konzentration der Biozide kleiner ist als die Sollkonzentration, die Menge an Biozid berechnet, die dem wasserführenden System zugegeben werden muss, um die Sollkonzentration zu erreichen, und
iii) eine Dosiereinrichtung aktiviert, die aus einem Vorratsgefäß eine solche Menge an Biozid dem wasserführenden System zudosiert, dass die Sollkonzentration zumindest angenähert erreicht wird.

3. Verfahren zur Steuerung der Konzentration organischer Biozide in einem wasserführenden System, **dadurch gekennzeichnet, dass** man
i) nach Anspruch 1 gemäß Alternative b) direkt die Abweichung der Konzentration der Biozide von der vorgegebenen Sollkonzentration bestimmt,
ii) für den Fall, dass die Konzentration der Biozide kleiner ist als die Sollkonzentration
iii) eine Dosiereinrichtung aktiviert, die aus einem Vorratsgefäß so lange Biozid dem wasserführenden System zudosiert, bis bei wiederholter Bestimmung der Abweichung der Konzentration der Biozide von der vorgewählten Sollkonzentration eine Abweichung ermittelt wird, die nicht mehr als 20 % der Sollkonzentration beträgt.

4. Verfahren zur Steuerung der Konzentration organischer Biozide in einem wasserführenden System, **dadurch gekennzeichnet, dass** man dem wasserführenden System kontinuierlich oder diskontinuierlich eine vorgewählte Menge an Biozid pro vorgewähltem Zeitintervall zusetzt und
i) nach Anspruch 1 entweder gemäß Alternative a) die Konzentration dieser Biozide bestimmt und danach ihre Abweichung von einer vorgewählten Sollkonzentration berechnet oder gemäß Alternative b) direkt die Abweichung der Konzentration der Biozide von der vorgewählten Sollkonzentration bestimmt und
ii) für den Fall, dass die Konzentration der Biozide um mehr als 20 % von der vorgewählten Sollkonzentration abweicht, bei einer Abweichung nach unten die vorgewählte Menge an pro Zeiteinheit zugesetztem Biozid erhöht oder bei einer Abweichung nach oben die vorgewählte Menge an pro Zeiteinheit zugesetztem Biozid verringert.

5. Verfahren nach einem oder mehreren der Ansprüche 1 bis 4, **dadurch gekennzeichnet, dass** es ohne menschliches Eingreifen programmgesteuert automatisch abläuft.

6. Verfahren nach einem oder mehreren der Ansprüche 2 bis 5, **dadurch gekennzeichnet, dass** man die biologische Belastung des wasserführenden Systems bestimmt und in dem Fall, dass diese einen vorgewählten Höchstwert übersteigt, die vorgewählte Sollkonzentration an organischem Biozid erhöht.

7. Verfahren nach einem oder mehreren der Ansprüche 1 bis 6, **dadurch gekennzeichnet, dass** die Bestimmung der Konzentration der organischen Biozide oder der Abweichung der Konzentration von einer vorgewählten Sollkonzentration gestartet wird:
i) automatisch nach vorgewählten Zeitintervallen oder zu vorgewählten Zeitpunkten oder
ii) durch eine manuell gegebene Aufforderung oder
iii) automatisch aufgrund einer Bestimmung der biologischen Belastung des wasserführenden Systems, wenn diese einen vorgewählten Maximalwert übersteigt.

8. Verfahren nach einem oder mehreren der Ansprüche 1 bis 7, **dadurch gekennzeichnet, dass** es sich bei den Bioziden um halogenierte Derivate von Carbonsäureamiden, um organische Percarbonsäuren oder deren Salze oder um Verbindungen mit mindestens einer Hydroxyethylgruppe handelt.

9. Verfahren nach einem oder mehreren der Ansprüche 1 bis 8, **dadurch gekennzeichnet, dass** die organischen Biozide ausgewählt sind aus Dibromnitrilopropionamid, Peressigsäure, 2-Hydroxymethylaminoethanol und Tris(2-hydroxyethyl)-hexahydrotriazin.

10. Verfahren nach einem oder mehreren der Ansprüche 1 bis 9, **dadurch gekennzeichnet, dass** es sich bei dem wasserführenden System um ein wasserführendes Kreislaufsystem, insbesondere um einen Kühlkreislauf handelt.
